# EUROPÄISCHE PATENTSCHRIFT

(11) **EP 3 505 295 B1**
(45) Veröffentlichungstag und Bekanntmachung des Hinweises auf die Patenterteilung: **24.06.2020**
(21) Anmeldenummer: 18210239.2
(22) Anmeldetag: 04.12.2018
(51) Int. Cl.: B23P 11/02, B23P 19/027, F16D 1/094, F01D 25/28, F16H 57/08, F02C 7/36, B23P 19/02

(54) **ANORDNUNG MIT EINER PRESSE, MIT ZWEI BAUTEILEN UND MIT WENIGSTENS EINEM SPANNELEMENT**
ARRANGEMENT WITH A PRESS WITH TWO PARTS AND AT LEAST ONE GRIPPING ELEMENT
DISPOSITIF COMPORTANT UNE PRESSE, DEUX COMPOSANTS ET AU MOINS UN ÉLÉMENT DE SERRAGE

(30) Priorität: 08.12.2017 DE 102017129359
(43) Veröffentlichungstag der Anmeldung: 03.07.2019
(73) Patentinhaber: Rolls-Royce Deutschland Ltd & Co KG, 15827 Blankenfelde-Mahlow (DE)
(72) Erfinder: Kallianteris, Christos, 15827 Blankenfelde-Mahlow (DE)
(74) Vertreter: Schmidt, Martin Michael

(56) Entgegenhaltungen:
- EP-A1- 0 718 515
- EP-A1- 2 050 975
- DE-A1- 3 145 521
- DE-U1- 20 307 136

## Beschreibung

Die Erfindung betrifft eine Anordnung mit einer Presse, mit zwei Bauteilen und mit wenigstens einem Spannelement gemäß der im Oberbegriff des Patentanspruches 1 näher definierten Art.

Eine Vorrichtung mit einem Hydraulikwerkzeug zur reibschlüssigen Kupplung zweier koaxialer Bauteile ist aus der EP 2 050 975 A1 bekannt.

Aus der Praxis bekannte Anordnungen mit einer Presse, mit zwei Bauteilen und mit wenigstens einem Spannelement werden dazu eingesetzt, um die beiden Bauteile mittels des Spannelementes drehfest miteinander zu verbinden. Das Spannelement wird über ein Stellelement der Presse in axialer Richtung radial zwischen einen Bereich des ersten Bauteils und einen Bereich des zweiten Bauteils eingeschoben. Das Stellelement ist hierfür von einem oftmals hydraulisch betätigbaren Aktor axial verschiebbar. Dabei ist das erste Bauteil beispielsweise als Lagerbolzen eines Planetenrades eines Planetengetriebes ausgebildet, während das zweite Bauteil ein Planetenträger ist. Zum drehfesten Verbinden des Lagerbolzens mit dem Planetenträger werden zwischen Endbereichen des Lagerbolzens und Lagerbereichen des Planetenträgers, die die Endbereiche des Lagerbolzens radial umgreifen, als Spannhülsen ausgeführte Spannelemente über den Aktor der Presse eingeschoben bzw. eingepresst.

Hierfür wird jeweils eine Spannhülse mit ihrer einen Stirnseite an den beiden Bauteilen angelegt und ausgehend von ihrer anderen Stirnseite von dem Aktor bzw. von dem Stellelement mit der zum Einschieben erforderlichen Fügekraft beaufschlagt und dabei zwischen den Lagerbolzen und den Planetenträger eingeschoben.

Nachteilig dabei ist jedoch, dass mittels solcher Anordnungen die Spannelemente bzw. Spannhülsen während des Einschiebens verkippen und asymmetrisch zwischen die Bauteile gedrückt werden, womit die drehfeste Verbindung zwischen den Bauteilen nicht in der angeforderten Art und Weise erreicht wird.

Der Erfindung liegt die Aufgabe zugrunde, eine Anordnung mit einer Presse, mit zwei Bauteilen und mit wenigstens einem Spannelement zur Verfügung zu stellen, mittels welcher das Spannelement möglichst gleichmäßig zwischen die beiden Bauteile einschiebbar ist.

Erfindungsgemäß wird diese Aufgabe mit einer Anordnung mit den Merkmalen des Patentanspruches 1 gelöst.

Die erfindungsgemäße Anordnung umfasst eine Presse, zwei Bauteile und wenigstens ein Spannelement, das über ein über einen Aktor axial verschiebbares Stellelement der Presse in axialer Richtung radial zwischen einen Bereich des ersten Bauteils und einen Bereich des zweiten Bauteils einschiebbar ist.

Erfindungsgemäß durchgreift das Stellelement sowohl die Bauteile als auch das wenigstens eine Spannelement in axialer Richtung. Des Weiteren wirkt das Stellelement einenends mit dem Aktor zusammen und ist anderenends mit einem Deckelelement ausgeführt. Über das Deckelelement steht das Stellelement mit den Bauteilen in Wirkverbindung. Das wenigstens eine Spannelement ist zwischen dem Deckelelement und den Bauteilen oder zwischen den Bauteilen und einem Gehäusebereich des Aktors angeordnet. Zusätzlich ist das Stellelement vom Aktor und/oder der Aktor zum Einschieben des Spannelementes zwischen die Bauteile in einem einen axialen Abstand zwischen dem Deckelelement und dem Gehäusebereich des Aktors verringernden Umfang bewegbar.

Aufgrund der erfindungsgemäßen Ausführung der Anordnung werden Verkippungen des Spannelementes während des Einschiebens zwischen den beiden Bauteilen auf einfache Art und Weise vermieden. Dabei ist besonders vorteilhaft, dass das Stellelement die Bauteile und auch das wenigstens eine Spannelement in axialer Richtung durchgreift. Des Weiteren begünstigt die Ausführung des Stellelementes mit dem Deckelelement eine symmetrische Einbringung des Spannelementes zwischen die Bauteile, da sowohl das Spannelement als auch die Bauteile von der Presse mit der zum Einschieben des Spannelementes zwischen die Bauteile erforderlichen Fügekraft in axialer Richtung von beiden Seiten gleichmäßig bzw. symmetrisch beaufschlagbar sind.

Bei einer besonders bauraumgünstigen Variante der erfindungsgemäßen Anordnung ist das Stellelement über den Aktor hydraulisch betätigbar, da hydraulische Aktoren durch eine hohe Leistungsdichte gekennzeichnet sind.

Ist ein Stellweg des Stellelementes und/oder des Aktors über gehäuseseitige Anschläge im Bereich des Aktors begrenzt, ist der Fügevorgang des Spannelementes mit den beiden Bauteilen ohne zusätzlichen Steuer- und Regelaufwand in gewünschtem Umfang umsetzbar.

Das Spannelement ist bei einer weiteren vorteilhaften Variante der erfindungsgemäßen Anordnung, bei der das Spannelement mit geringem Aufwand zwischen die beiden Bauteile einbringbar ist und mittels der eine gewünscht feste Lagerung des radial inneren Bauteiles im radial äußeren Bauteil realisierbar ist, eine Spannhülse, die im Bereich ihres äußeren Umfangs wenigstens annähernd zylindrisch und im Bereich ihres inneren Durchmessers wenigstens annähernd kegelförmig ausgebildet ist. Der Innendurchmesser der Spannhülse nimmt ausgehend von der den Bauteilen zugewandten Seite in Richtung der den Bauteilen abgewandten Seite ab, womit die Haltekraft der Presspassung mit zunehmendem Einschiebeweg der Spannhülse zwischen den beiden Bauteilen ansteigt.

Weist das radial innere Bauteil im Fügebereich eine wenigstens annähernd an die Spannhülse angepasste kegelförmige Außenkontur auf, während das radial äußere Bauteil im Fügebereich mit einer wenigstens annähernd zylindrischen Innenkontur ausgeführt ist, wird ein Verkanten des Spannelementes während des Fügevorganges auf konstruktiv einfache Art und Weise vermieden.

Ein Abstand zwischen den Anschlägen für das Stellelement und/oder den Aktor entspricht bei einer bauraumgünstigen Ausführungsform der erfindungsgemäßen Anordnung zumindest der axialen Länge des Bereiches des Spannelementes, um die die Spannhülse mittels des Stellelementes in die Bauteile einschiebbar ist.

Um die während des Einschiebens des Spannelementes zwischen die beiden Bauteile aufzubringenden Fügekräfte möglichst gering vorsehen zu müssen, ist das radial innere Bauteil bei einer weiteren vorteilhaften Ausführungsform der erfindungsgemäßen Anordnung mit einer Leitung ausgeführt, über die Hydraulikfluid in den Fügebereich zwischen dem Spannelement und dem radial inneren Bauteil unter Druck einleitbar ist. Dadurch ist auf einfache Art und Weise das Spannelement während des Fügevorgangs in radialer Richtung reversibel aufweitbar, während das radial innere Bauteil im Fügebereich mittels des unter Druck zugeführten Hydraulikfluids reversibel in Umfangsrichtung stauchbar ist. Wird die über das Hydraulikfluid in den Fügebereich zwischen dem Spannelement und dem radial inneren Bauteil aufgeprägte Druckkraft am Ende des Fügeprozesses wieder reduziert, baut sich durch das dabei auftretende Zusammenziehen des Spannelementes und das Aufweiten des radial inneren Bauteils im Fügebereich zwischen den beiden Bauteilen und dem Spannelement die gewünschte Lagerkraft auf, die Relativbewegungen zwischen den beiden Bauteilen sicher verhindert.

Ist auch das Spannelement mit einer Leitung ausgeführt, über die Hydraulikfluid aus dem Fügebereich zwischen dem Spannelement und dem radial inneren Bauteil in den Fügebereich zwischen dem Spannelement und dem radial äußeren Bauteil führbar ist, ist auch das radial äußere Bauteil über das Hydraulikfluid reversibel aufweitbar, während die Spannhülse in ihrem radial äußeren Bereich reversibel in Umfangsrichtung stauchbar bzw. während des Fügevorgangs einschnürbar ist. Wird am Ende des dann mit gewünscht niedrigen Fügekräften durchgeführten Einschiebevorgangs des Spannelementes zwischen die beiden Bauteile die durch das unter Druck zugeführte Hydraulikfluid auf das Spannelement und das radial äußere Bauteil aufgeprägte Druckkraft wieder abgebaut, schrumpft sich das radial äußere Bauteil auf das Spannelement auf. Dadurch wird die gewünscht hohe Lagerkraft zwischen dem radial äußeren Bauteil und dem Spannelement und somit auch zwischen den beiden Bauteilen erzielt, die Relativbewegungen zwischen den beiden Bauteilen in gewünschtem Umfang vermeidet.

Bei einer geringe Montagezeiten gewährleistenden Weiterbildung der erfindungsgemäßen Anordnung sind während eines Montageschrittes zwei Spannelemente zwischen das radial innere Bauteil und das radial äußere Bauteil durch Verschieben des Stellelementes und/oder des Aktors ausgehend von in axialer Richtung der Bauteile voneinander abgewandten Seiten der Bauteile einschiebbar.

Bei einer Weiterbildung der erfindungsgemäßen Anordnung ist in axialer Richtung zwischen dem Deckelelement oder dem Gehäusebereich des Aktors und wenigstens einem der Bauteile ein Distanzelement anordenbar. Damit besteht auf einfache Art und Weise auch die Möglichkeit, lediglich ein Spannelement zwischen die Bauteile einzuführen.

Ist das radial innere Bauteil ein Lagerbolzen eines Planetenrades und das äußere Bauteil ein Planetenträger eines Planetengetriebes, ist die Wirkverbindung zwischen dem Lagerbolzen und dem Planetenträger mit geringem Montageaufwand in gewünschtem Umfang herstellbar.

Sowohl die in den Patentansprüchen angegebenen Merkmale als auch die im nachfolgenden Ausführungsbeispiel des erfindungsgemäßen Triebwerks angegebenen Merkmale sind jeweils für sich allein oder in beliebiger Kombination miteinander geeignet, den erfindungsgemäßen Gegenstand weiterzubilden.

Weitere Vorteile und vorteilhafte Ausführungsformen der erfindungsgemäßen Anordnung ergeben sich aus den Patentansprüchen und dem nachfolgend unter Bezugnahme auf die Zeichnung prinzipmäßig beschriebenen Ausführungsbeispiel.

Es zeigt:
- Fig. 1: eine vereinfachte Schnittdarstellung eines Flugtriebwerks mit einem Bläser und mit einer Niederdruckturbine, wobei der Bläser über ein Getriebe mit der Niederdruckturbine in Verbindung steht;
- Fig. 2: eine stark schematisierte Längsschnittansicht einer bevorzugten Ausführungsform einer Anordnung mit einer Presse, mit zwei Bauteilen und mit zwei Spannelementen, die über ein über einen Aktor axial verschiebbares Stellelement der Presse in axialer Richtung zwischen Bereichen des ersten Bauteils und Bereichen des zweiten Bauteils einschiebbar sind; und
- Fig. 3: eine vergrößerte Ansicht eines in Fig. 2 näher gekennzeichneten Bereiches III.

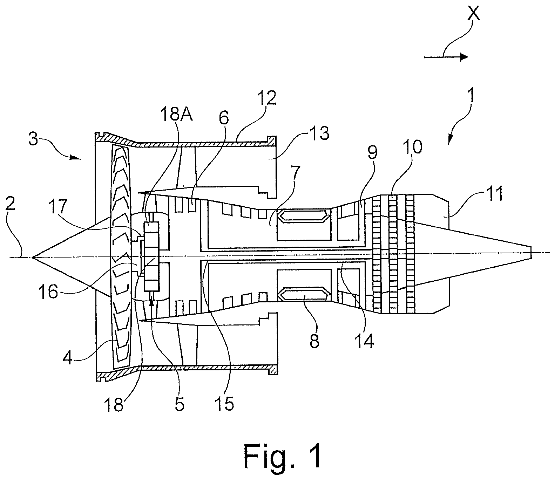

In Fig. 1 ist eine als Flugtriebwerk 1 eines Flugzeugs ausgeführte Strömungsmaschine mit einem Getriebe 5 gezeigt, das als Planetengetriebe ausgebildet ist. Das Flugtriebwerk 1 ist eine Turbomaschine, mit der das Getriebe 5 vorteilhaft kombiniert werden kann. Aus dem Folgenden ergibt sich eindeutig, dass das Getriebe 5 auch bei anderweitig ausgeführten Turbomaschinen, wie einem Propellerturbinenluftstrahltriebwerk bzw. einem Turboprop, eingesetzt werden kann.

Das Flugtriebwerk 1 weist eine Hauptdrehachse 2 auf. Des Weiteren umfasst das Flugtriebwerk 1 in axialer Strömungsrichtung X einen Lufteinlass 3, einen Bläser 4, das Getriebe 5, einen Niederdruckverdichter 6, einen Hochdruckverdichter 7, eine Verbrennungseinrichtung 8, eine Hochdruckturbine 9, eine Niederdruckturbine 10 und eine Ausströmdüse 11. Eine Triebwerksgondel 12 umgibt das Flugtriebwerk 1 und begrenzt den Lufteinlass 3.

Das Flugtriebwerk 1 arbeitet in herkömmlicher Weise, wobei in den Lufteinlass 3 eintretende Luft durch den Bläser 4 beschleunigt wird, um zwei Luftströme zu erzeugen. Ein erster Luftstrom strömt in den Zwischendruckverdichter 6 und ein zweiter Luftstrom wird durch einen Nebenstromkanal 13 bzw. Bypasskanal geführt, um einen Antriebsschub bereitzustellen. Der Niederdruckverdichter 6 komprimiert den ihm zugeführten Luftstrom, bevor die Luft im Bereich des Hochdruckverdichters 7 weiter verdichtet wird.

Die aus dem Hochdruckverdichter 7 ausströmende Druckluft wird in die Verbrennungseinrichtung 8 eingeleitet, wo eine Vermischung mit Kraftstoff erfolgt und das Kraftstoff-Luft-Gemisch verbrannt wird. Die entstehenden heißen Verbrennungsprodukte expandieren und treiben dabei die Hochdruckturbine 9 und die Niederdruckturbine 10 an, bevor sie über die Ausströmdüse 11 ausgeführt werden, um einen zusätzlichen Antriebsschub bereitzustellen. Die Hochdruckturbine 9 und die Niederdruckturbine 10 treiben mittels einer Hochdruckwelle 14 bzw. einer Niederdruckwelle 15 den Hochdruckverdichter 7 bzw. den Niederdruckverdichter 6 an. Die die Niederdruckturbine 10 mit dem Niederdruckverdichter 6 koppelnde Niederdruckwelle 15 ist über das ein Untersetzungsgetriebe darstellende Getriebe 5 mit dem Bläser 4 gekoppelt. Ein über die Niederdruckwelle 15 am Getriebe 5 anliegendes Antriebsmoment wird der Standübersetzung der Getriebes 5 entsprechend angehoben und einer Bläserwelle 16 zugeführt. Wenn der Bläser 4 von der Niederdruckturbine 10 angetrieben wird, wird die Drehzahl der Niederdruckwelle 15 der Übersetzung des Getriebes 5 entsprechend reduziert und die Bläserwelle 16 sowie der Bläser 4 mit dieser reduzierten Drehzahl und mit einem gegenüber dem an der Niederdruckwelle 15 anliegenden Drehmoment erhöhten Drehmoment angetrieben.

Bei der in Fig. 1 gezeigten Ausführung des Getriebes 5 sind ein Sonnenrad 18 des Getriebes 5 drehfest mit der Niederdruckwelle 15 und ein Planetenträger 17 des Getriebes 5 drehfest mit der Bläserwelle 16 verbunden. Ein Hohlrad 18A des Getriebes 5 ist gehäusefest angebunden. Somit liegt eine so genannte epizyklische Ausführung des Getriebes 5 vor.

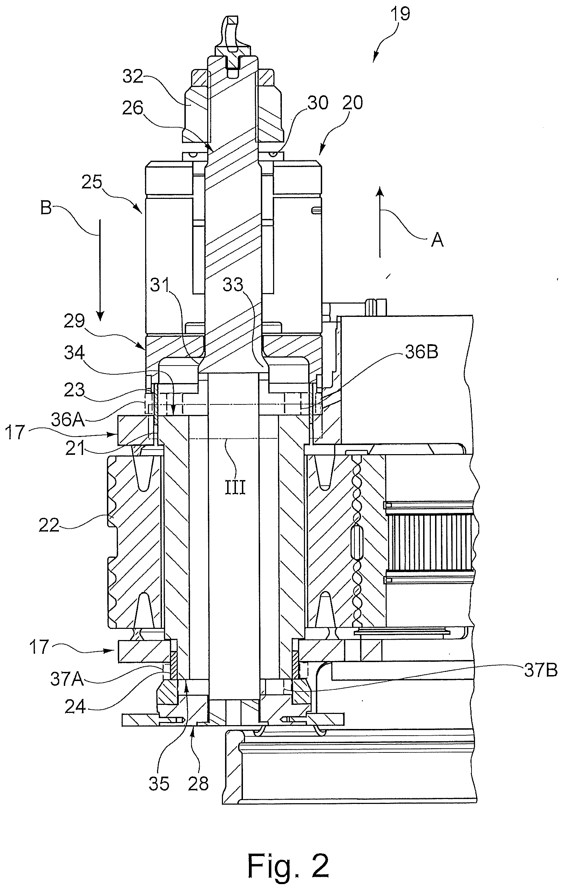

Fig. 2 zeigt eine Längsschnittansicht einer Anordnung 19, die eine Presse 20, den Planetenträger 17 sowie einen damit zu verbindenden Lagerbolzen 21 für ein darauf drehbar gelagertes Planetenrad 22 des Getriebes 5 umfasst. Darüber hinaus ist die Anordnung 19 mit zwei Spannelementen 23, 24 ausgebildet, die über einen axial verstellbaren Aktor 25 und ein über den Aktor 25 axial verschiebbares Stellelement 26 der Presse 20 jeweils in axialer Richtung A bzw. B radial zwischen einen Bereich des Planetenträgers 17 und einen Bereich des Lagerbolzens 21 einschiebbar sind. Das Stellelement 26 durchgreift den Aktor 25, den Planetenträger 17 und den Lagerbolzen 21 in axialer Richtung A bzw. B.

Darüber hinaus wirkt das Stellelement 26 einenends mit dem Aktor 25 zusammen und ist anderenends mit einem Deckelelement 28 ausgeführt. Über das Deckelelement 28 und das Spannelement 24 steht das Stellelement 26 mit dem Planetenträger 17 und den Lagerbolzen 21 in Wirkverbindung. Das Spannelement 24 ist axial zwischen dem Deckelelement 28 und dem Planetenträger 17 und dem Lagerbolzen 21 positioniert, während das Spannelement 23 zwischen dem Planetenträger 17 und dem Lagerbolzen 21 und einem Gehäusebereich 29 des Aktors 25 angeordnet ist. Zusätzlich sind das Stellelement 26 und der Aktor 25 zum Einschieben der Spannelemente 23 und 24 zwischen den Planetenträger 17 und den Lagerbolzen 21 in einem einen axialen Abstand zwischen dem Deckelelement 28 und dem Gehäusebereich 29 des Aktors 25 verringernden Umfang relativ zum Planetenträger 17 und dem Lagerbolzen 21 bewegbar.

Der Aktor 25 ist vorliegend als hydraulischer Aktor ausgebildet, mittels dem das Stellelement 26 in axialer Richtung A verschiebbar ist. Des Weiteren ist der Aktor 25 so ausgeführt, dass der Aktor 25 während der axialen Verstellung des Stellelementes 26 ebenfalls in axialer Richtung B auf den Planetenträger 17 und den Lagerbolzen 21 zu bewegt wird. Dabei sind die Stellwege des Stellelementes 26 und des Aktors 25 über gehäuseseitige Anschläge 30, 31 im Bereich des Aktors 25 begrenzt. Der Anschlag 30 wirkt mit einer auf das Stellelement 26 aufgeschraubten Mutter 32 zusammen, während die Stellwege des Stellelementes 26 und des Aktors 25 jeweils in Fügerichtung der beiden Spannelemente 23 und 24 mittels eines mit dem Anschlag 31 zusammenwirkenden vergrößerten Durchmesserbereiches 33 des Stellelementes 26 begrenzt sind .

Die Spannelemente 23 und 24 werden während des Fügeprozesses bzw. während des Einschiebens der Spannelemente 23 und 24 zwischen den Planetenträger 17 und den Lagerbolzen 21 durch das aktorseitige axiale Verschieben des Stellelementes 26 und die damit einhergehende Verstellung des Aktors 25 ausgehend von in axialer Richtung des Planetenträgers 17 und des Lagerbolzens 21 voneinander abgewandten Seiten 34, 35 eingeschoben.

Soll über die Anordnung 19 lediglich das Spannelement 23 oder das Spannelement 24 durch die vorbeschriebene aktorseitige Verstellung des Stellelementes 26 oder die Verstellung des Aktors 25 zwischen den Planetenträger 17 und den Lagerbolzen 21 während eines Fügeprozesses eingeschoben werden, besteht auf einfache Art und Weise die Möglichkeit, entweder zwischen dem Deckelelement 28 und dem Planetenträger 17 und/oder dem Lagerbolzen 21 oder zwischen dem Gehäusebereich 29 und dem Lagerbolzen 17 und/oder dem Planetenträger 17 ein in Fig. 2 lediglich strichliert dargestelltes hülsenförmiges bzw. ringförmiges Distanzelement 36A bzw. 36B oder 37A bzw. 37B vorzusehen. Über die Distanzelemente 36A bzw. 36B oder 37A bzw. 37B wird jeweils eine Verringerung des Abstandes zwischen dem Deckelelement 28 und der Seite 35 oder zwischen dem Gehäusebereich 29 und der Seite 34 verhindert und lediglich das Spannelement 23 oder das Spannelement 24 zwischen den Planetenträger 17 und den Lagerbolzen 21 in gewünschtem Umfang eingeschoben.

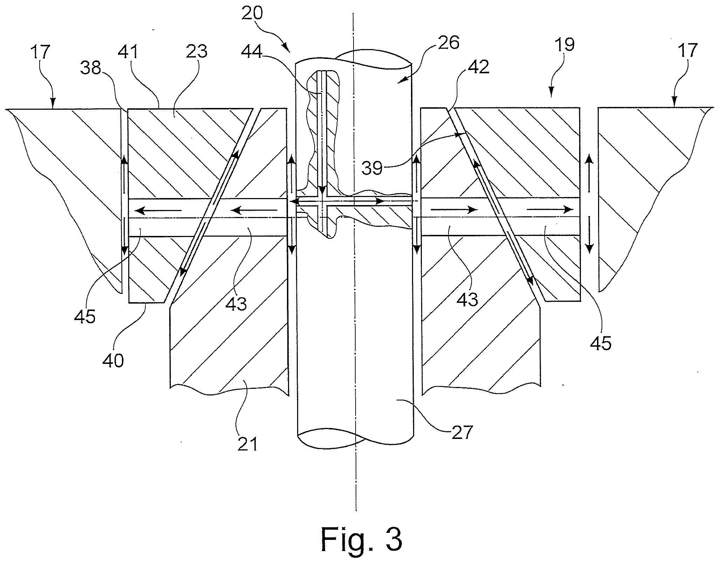

Fig. 3 zeigt eine vergrößerte Schnittansicht des in Fig. 2 näher gekennzeichneten Bereiches III, der das Spannelement 23, einen Bereich des Stellelementes 26 sowie Bereiche des Lagerbolzens 21 und des Planetenträgers 17 umfasst. Aus der Darstellung gemäß Fig. 3 geht hervor, dass das Spannelement 23, das prinzipiell den gleichen Aufbau wie das Spannelement 24 aufweist, eine Spannhülse ist, die im Bereich ihres äußeren Umfangs 38 zylindrisch und im Bereich ihres inneren Durchmessers 39 kegelförmig ausgebildet ist. Der Innendurchmesser 39 der Spannhülse 23 nimmt ausgehend von der den Bauteilen bzw. dem Planetenträger 17 und dem Lagerbolzen 21 zugewandten Seite 40 in Richtung der den Bauteilen bzw. dem Planetenträger 17 und dem Lagerbolzen 21 abgewandten Seite 41 ab.

Zusätzlich weist der Lagerbolzen 21 im Fügebereich mit dem Spannelement 23 eine wenigstens annähernd an die Spannhülse 23 angepasste kegelförmige Außenkontur 42 auf, während der Planetenträger 17 im Fügebereich mit dem Spannelement 23 mit einer zylindrischen Innenkontur ausgeführt ist. Sowohl der Planetenträger 17 als auch der Lagerbolzen 21 sind im Fügebereich mit dem Spannelement 24 wie vorstehend näher beschriebenen wie im Fügebereich mit dem Spannelement 23 ausgebildet.

Der Lagerbolzen 21 ist mit Leitungen 43 ausgeführt, die mit einer Leitung 44 des Stellelementes 26 in Überdeckung sind, wenn das Stellelement 26 eine definierte Position erreicht. Im Spannelement 23 sind Leitungen 45 vorgesehen, über die Hydraulikfluid aus dem Fügebereich zwischen dem Spannelement 23 und dem Lagerbolzen 21 in den Fügebereich zwischen dem Spannelement 23 und dem Planetenträger 17 führbar ist. Durch Einleiten des Hydraulikfluids über die Leitungen 44 und 43 in die Fügebereiche zwischen dem Spannelement 23 und dem Lagerbolzen 21 bzw. zwischen dem Spannelement 23 und dem Planetenträger 17 ist während des Einschiebens des Spannelementes 23 zwischen den Lagerbolzen 21 und den Planetenträger 17 der Lagerbolzen 21 umfangsseitig reversibel einschnürbar und das Spannelement 23 und der Planetenträger 17 reversibel aufweitbar, während das Spannelement 23 im äußeren Umfang 38 reversibel zusammengepresst wird. Damit ist das Spannelement 23 mit geringen Fügekräften zwischen den Lagerbolzen 21 und den Planetenträger 17 einschiebbar.

Am Ende des Fügeprozesses wird der anliegende Hydraulikdruck reduziert bzw. abgeschaltet, womit die zuvor reversible Aufweitung des Planetenträgers 17 sowie die reversible Einschnürung des Lagerbolzens 21 zurückgeht und das Spannelement 23 die gewünschte drehfeste Verbindung zwischen dem Planetenträger 17 und dem Lagerbolzen 21 in Form einer Presspassung herstellt.

Die Leitung 44 des Stellelementes 26 erstreckt sich in axialer Richtung des Stellelementes 26 bis in den Fügebereich zwischen dem Spannelement 24 mit dem Lagerbolzen 21 und dem Planetenträger 17. Das Spannelement 24 und der Lagerbolzen 21 sind in dem der Seite 35 zugewandten Endbereich in gleichem Umfang mit Leitungen ausgebildet, um während des Fügevorganges des Spannelementes 24 Hydraulikfluid über das Stellelement 26 in die Fügebereiche zwischen dem Spannelement 24 und dem Lagerbolzen 21 und zwischen dem Spannelement 24 dem Planetenträger 17 einleiten zu können.

### Bezugszeichenliste

- 1: Strömungsmaschine; Flugtriebwerk
- 2: Hauptdrehachse
- 3: Lufteinlass
- 4: Bläser
- 5: Getriebe
- 6: Niederdruckverdichter
- 7: Hochdruckverdichter
- 8: Verbrennungseinrichtung
- 9: Hochdruckturbine
- 10: Niederdruckturbine
- 11: Ausströmdüse
- 12: Triebwerksgondel
- 13: Nebenstromkanal
- 14: Hochdruckwelle
- 15: Niederdruckwelle
- 16: Bläserwelle
- 17: Planetenträger
- 18: Sonnenrad
- 18A: Hohlrad
- 19: Anordnung
- 20: Presse
- 21: Lagerbolzen
- 22: Planetenrad
- 23: Spannelement
- 24: Spannelement
- 25: Aktor
- 26: Stellelement
- 28: Deckelelement
- 29: Gehäusebereich des Aktors
- 30, 31: gehäuseseitiger Anschlag
- 32: Mutter
- 33: vergrößerter Durchmesserbereich des Stellelementes
- 34, 35: Seite des Planetenträgers und des Lagerbolzens
- 36A bis 37B: Distanzelement
- 38: äußerer Umfang des Spannelementes 23
- 39: innerer Durchmesser des Spannelementes 23
- 40, 41: Seite des Spannelementes 23
- 42: kegelförmige Außenkontur des Lagerbolzens
- 43: Leitung des Lagerbolzens
- 44: Leitung des Stellelements
- 45: Leitung des Spannelementes 23
- A, B: axiale Richtung
- X: axiale Strömungsrichtung

## Patentansprüche

1. Anordnung (19) mit einer Presse (20), mit zwei Bauteilen (17, 21) und mit wenigstens einem Spannelement (23, 24), das über ein über einen Aktor (25) axial verschiebbares Stellelement (26) der Presse (20) in axialer Richtung radial zwischen einen Bereich des ersten Bauteils (17) und einen Bereich des zweiten Bauteils (21) einschiebbar ist, **dadurch gekennzeichnet, dass** das Stellelement (26) sowohl die Bauteile (17, 21) als auch das wenigstens eine Spannelement (23, 24) in axialer Richtung durchgreift, wobei das Stellelement (26) einenends mit dem Aktor (25) zusammenwirkt und anderenends mit einem Deckelelement (28) ausgeführt ist, über das das Stellelement (26) mit den Bauteilen (17, 21) in Wirkverbindung steht, wobei das wenigstens eine Spannelement (23, 24) zwischen dem Deckelelement (28) und den Bauteilen (17, 21) oder zwischen den Bauteilen (17, 21) und einem Gehäusebereich (29) des Aktors (25) angeordnet ist, und wobei das Stellelement (26) vom Aktor (25) und/oder der Aktor (25) zum Einschieben des Spannelementes (23, 24) zwischen die Bauteile (17, 21) in einem einen axialen Abstand zwischen dem Deckelelement (28) und dem Gehäusebereich (29) des Aktors (25) verringernden Umfang bewegbar ist.

2. Anordnung nach Anspruch 1, **dadurch gekennzeichnet, dass** das Stellelement (26) über den Aktor (25) hydraulisch betätigbar ist.

3. Anordnung nach Anspruch 1 oder 2, **dadurch gekennzeichnet, dass** ein Stellweg des Stellelementes (26) und/oder des Aktors (25) über gehäuseseitige Anschläge (30, 31) im Bereich des Aktors (25) begrenzt ist.

4. Anordnung nach einem der Ansprüche 1 bis 3, **dadurch gekennzeichnet, dass** das Spannelement (23, 24) eine Spannhülse ist, die im Bereich ihres äußeren Umfangs (38) wenigstens annähernd zylindrisch und im Bereich ihres inneren Durchmessers (39) wenigstens annähernd kegelförmig ausgebildet ist, wobei der Innendurchmesser der Spannhülse (23, 24) ausgehend von der den Bauteilen (17, 21) zugewandten Seite (40) in Richtung der den Bauteilen (17, 21) abgewandten Seite (41) abnimmt.

5. Anordnung nach Anspruch 4, **dadurch gekennzeichnet, dass** das radial innere Bauteil (21) im Fügebereich eine wenigstens annähernd an die Spannhülse (23, 24) angepasste kegelförmige Außenkontur (42) aufweist, während das radial äußere Bauteil (17) im Fügebereich mit einer wenigstens annähernd zylindrischen Innenkontur ausgeführt ist.

6. Anordnung nach einem der Ansprüche 3 bis 5, **dadurch gekennzeichnet, dass** ein Abstand zwischen den Anschlägen (30, 31) für das Stellelement (26) und/oder den Aktor (25) zumindest der axialen Länge des Bereiches des Spannelementes (23, 24) entspricht, um die das Spannelement (23, 24) mittels des Stellelementes (26) und/oder des Aktors (25) zwischen die Bauteile (17, 21) einschiebbar ist.

7. Anordnung nach einem der Ansprüche 1 bis 6, **dadurch gekennzeichnet, dass** das radial innere Bauteil (21) mit einer Leitung (43) ausgeführt ist, über die Hydraulikfluid in den Fügebereich zwischen dem Spannelement (23, 24) und dem radial inneren Bauteil (21) unter Druck einleitbar ist.

8. Anordnung nach einem der Ansprüche 1 bis 7, **dadurch gekennzeichnet, dass** das Spannelement (23, 24) mit einer Leitung (45) ausgeführt ist, über die Hydraulikfluid aus dem Fügebereich zwischen dem Spannelement (23, 24) und dem radial inneren Bauteil (21) in den Fügebereich zwischen dem Spannelement (23, 24) und dem radial äußeren Bauteil (17) führbar ist.

9. Anordnung nach einem der Ansprüche 1 bis 8, **dadurch gekennzeichnet, dass** zwischen das radial innere Bauteil (21) und das radial äußere Bauteil (17) zwei Spannelemente (23, 24) durch Verschieben des Stellelementes (26) und/oder des Aktors (25) ausgehend von in axialer Richtung der Bauteile (17, 21) voneinander abgewandten Seiten (40, 41) der Bauteile (17, 21) einschiebbar sind.

10. Anordnung nach einem der Ansprüche 1 bis 9, **dadurch gekennzeichnet, dass** in axialer Richtung zwischen dem Deckelelement (28) oder dem Gehäusebereich (29) des Aktors (25) und wenigstens einem der Bauteile (17, 21) ein Distanzelement (36A bis 37B) anordenbar ist.

11. Anordnung nach einem der Ansprüche 1 bis 10, **dadurch gekennzeichnet, dass** das radial innere Bauteil (21) ein Lagerbolzen eines Planetenrades (22) und das radial äußere Bauteil (17) ein Planetenträger eines Planetengetriebes (5) ist.

## Claims

1. Arrangement (19) with a press (20), with two components (17, 21) and with at least one clamping element (23, 24) which can be inserted in the axial direction, via an actuating element (26) of the press (20) which is axially displaceable via an actuator (25), radially between a region of the first component (17) and a region of the second component (21), **characterized in that** the actuating element (26) passes through both the components (17, 21) and also the at least one clamping element (23, 24) in the axial direction, wherein the actuating element (26) at one end cooperates with the actuator (25) and at the other end is configured with a cover element (28) via which the actuating element (26) is actively connected to the components (17, 21), wherein the at least one clamping element (23, 24) is arranged between the cover element (28) and the components (17, 21) or between the components (17, 21) and a housing region (29) of the actuator (25), and wherein the actuating element (26) is movable by the actuator (25) and/or the actuator (25) is movable, for insertion of the clamping element (23, 24) between the components (17, 21), in a scope reducing an axial distance between the cover element (28) and the housing region (29) of the actuator (25).

2. Arrangement according to Claim 1, **characterized in that** the actuating element (26) can be actuated hydraulically via the actuator (25).

3. Arrangement according to Claim 1 or 2, **characterized in that** an actuation travel of the actuating element (26) and/or the actuator (25) is limited via housing-side stops (30, 31) in the region of the actuator (25).

4. Arrangement according to any of Claims 1 to 3, **characterized in that** the clamping element (23, 24) is a clamping sleeve which is formed so as to be at least approximately cylindrical in the region of its outer periphery (38) and so as to be at least approximately conical in the region of its inner diameter (39), wherein the inner diameter of the clamping sleeve (23, 24) diminishes, starting from the side (40) facing the components (17, 21), in the direction of the side (41) facing away from the components (17, 21).

5. Arrangement according to Claim 4, **characterized in that** the radially inner component (21) in the joint region has a conical outer contour (42) which is at least approximately adapted to the clamping sleeve (23, 24), while the radially outer component (17) in the joint region is configured with an at least approximately cylindrical inner contour.

6. Arrangement according to any of Claims 3 to 5, **characterized in that** a distance between the stops (30, 31) for the actuating element (26) and/or the actuator (25) corresponds at least to the axial length of the region of the clamping element (23, 24) by which the clamping element (23, 24) can be inserted between the components (17, 21) by means of the actuating element (26) and/or the actuator (25).

7. Arrangement according to any of Claims 1 to 6, **characterized in that** the radially inner component (21) is configured with a line (43) via which hydraulic fluid can be conducted under pressure into the joint region between the clamping element (23, 24) and the radially inner component (21).

8. Arrangement according to any of Claims 1 to 7, **characterized in that** the clamping element (23, 24) is configured with a line (45) via which hydraulic fluid can be guided from the joint region between the clamping element (23, 24) and the radially inner component (21) into the joint region between the clamping element (23, 24) and the radially outer component (17).

9. Arrangement according to any of Claims 1 to 8, **characterized in that** two clamping elements (23, 24) can be inserted between the radially inner component (21) and the radially outer component (17) by displacement of the actuating element (26) and/or the actuator (25), starting from sides (40, 41) of the components (17, 21) facing away from each other in the axial direction of the components (17, 21).

10. Arrangement according to any of Claims 1 to 9, **characterized in that** a spacer element (36A to 37B) may be arranged in the axial direction between the cover element (28) or the housing region (29) of the actuator (25) and at least one of the components (17, 21).

11. Arrangement according to any of Claims 1 to 10, **characterized in that** the radially inner component (21) is a bearing bolt of a planet wheel (22) and the radially outer component (17) is a planet carrier of a planetary gear mechanism (5).

## Revendications

1. Agencement (19) comprenant une presse (20), deux composants (17, 21) et au moins un élément de serrage (23, 24) qui peut être inséré dans la direction axiale radialement entre une région du premier composant (17) et une région du deuxième composant (21) par le biais d'un élément de réglage (26) de la presse (20) déplaçable axialement par le biais d'un actionneur (25), **caractérisé en ce que** l'élément de réglage (26) traverse à la fois les composants (17, 21) et l'au moins un élément de serrage (23, 24) dans la direction axiale, l'élément de réglage (26) coopérant à une extrémité avec l'actionneur (25) et étant, à l'autre extrémité, doté d'un élément de couvercle (28) par le biais duquel l'élément de réglage (26) est en liaison fonctionnelle avec les composants (17, 21), l'au moins un élément de serrage (23, 24) étant disposé entre l'élément de couvercle (28) et les composants (17, 21) ou entre les composants (17, 21) et une région de boîtier (29) de l'actionneur (25), et l'élément de réglage (26) étant déplaçable par l'actionneur (25) et/ou l'actionneur (25) étant déplaçable pour l'insertion de l'élément de serrage (23, 24) entre les composants (17, 21) suivant une ampleur réduisant une distance axiale entre l'élément de couvercle (28) et la région de boîtier (29) de l'actionneur (25).

2. Agencement selon la revendication 1, **caractérisé en ce que** l'élément de réglage (26) peut être actionné hydrauliquement par le biais de l'actionneur (25).

3. Agencement selon la revendication 1 ou 2, **caractérisé en ce qu'**une course de réglage de l'élément de réglage (26) et/ou de l'actionneur (25) est limitée par le biais de butées (30, 31) côté boîtier dans la région de l'actionneur (25).

4. Agencement selon l'une des revendications 1 à 3, **caractérisé en ce que** l'élément de serrage (23, 24) est une douille de serrage qui est, dans la région de sa périphérie extérieure (38), fermée au moins approximativement de manière cylindrique et, dans la région de son diamètre intérieur (39), formée au moins approximativement de manière conique, le diamètre intérieur de la douille de serrage (23, 24) diminuant à partir du côté (40) tourné vers les composants (17, 21) en direction du côté (41) opposé aux composants (17, 21).

5. Agencement selon la revendication 4, **caractérisé en ce que** le composant (21) radialement intérieur présente, dans la région d'assemblage, un contour extérieur conique (42) adapté au moins approximativement à la douille de serrage (23, 24), tandis que le composant (17) radialement extérieur est, dans la région d'assemblage, doté d'un contour intérieur au moins approximativement cylindrique.

6. Agencement selon l'une des revendications 3 à 5, **caractérisé en ce qu'**une distance entre les butées (30, 31) pour l'élément de réglage (26) et/ou l'actionneur (25) correspond au moins à la longueur axiale de la région de l'élément de serrage (23, 24) sur laquelle l'élément de serrage (23, 24) peut être inséré entre les composants (17, 21) au moyen de l'élément de réglage (26) et/ou de l'actionneur (25).

7. Agencement selon l'une des revendications 1 à 6, **caractérisé en ce que** le composant (21) radialement intérieur est doté d'une conduite (43) par le biais de laquelle le fluide hydraulique peut être introduit sous pression dans la région d'assemblage entre l'élément de serrage (23, 24) et le composant (21) radialement intérieur.

8. Agencement selon l'une des revendications 1 à 7, **caractérisé en ce que** l'élément de serrage (23, 24) est doté d'une conduite (45) par le biais de laquelle le fluide hydraulique peut être guidé hors de la région d'assemblage entre l'élément de serrage (23, 24) et le composant (21) radialement intérieur dans la région d'assemblage entre l'élément de serrage (23, 24) et le composant (17) radialement extérieur.

9. Agencement selon l'une des revendications 1 à 8, **caractérisé en ce qu'**entre le composant (21) radialement intérieur et le composant (17) radialement extérieur, deux éléments de serrage (23, 24) peuvent être introduits par déplacement de l'élément de réglage (26) et/ou de l'actionneur (25) à partir de côtés (40, 41) des composants (17, 21) opposés l'un à l'autre dans la direction axiale des composants (17, 21).

10. Agencement selon l'une des revendications 1 à 9, **caractérisé en ce qu'**un élément d'espacement (36A à 37B) peut être disposé dans la direction axiale entre l'élément de couvercle (28) ou la région de boîtier (29) de l'actionneur (25) et au moins l'un des composants (17, 21).

11. Agencement selon l'une des revendications 1 à 10, **caractérisé en ce que** le composant (21) radialement intérieur est un boulon de palier d'un pignon satellite (22) et le composant (17) radialement extérieur est un porte-satellites d'une transmission planétaire (5).
